# EUROPEAN PATENT SPECIFICATION

(11) **EP 3 550 176 B1**
(45) Date of publication and mention of the grant of the patent: **24.03.2021**
(21) Application number: 18209587.7
(22) Date of filing: 30.11.2018
(51) Int. Cl.: F16F 7/00, A62B 35/04, F16F 7/12, H02G 7/18, F16F 1/02, F16F 3/02, F16F 7/14

(54) **ENERGY ABSORBING DEVICE WITH FALL INDICATOR FOR LIFELINES**
ENERGIEABSORBIERENDE VORRICHTUNG FÜR FALLANZEIGER FÜR RETTUNGSLEINEN
DISPOSITIF D'ABSORPTION D'ÉNERGIE AVEC INDICATEUR DE CHUTE POUR LIGNES DE VIE

(30) Priority: 06.04.2018 ES 201830473 U
(43) Date of publication of application: 09.10.2019
(73) Proprietor: COMERCIAL IGENA, SA, 08339 Vilassar de Dalt (ES)
(72) Inventor: CARRÉ, Guillaume, 69210 BULLY (FR); VAN ERPS CRAHAY, Paul, 08339 VILASSAR DE DALT (ES)
(74) Representative: Manresa Medina, José Manuel

(56) References cited:
- FR-A1- 2 857 601
- GB-A- 2 426 563
- US-A- 4 791 243

## Description

Energy absorbing device with fall indicator for lifelines, of the type comprising a winding shaft, a first rolled spiral, which defines two ends, one free first end, which is connected to a cable or a fixed element, and a second end, which is rolled on the winding shaft, characterized by comprising two identical second spirals, arranged parallel to each other and configuring a fork on the sides of the first spiral, said second spirals configure third free ends, arranged in the opposite direction to the free first end, wherein fourth ends of the second spirals are maintained rolled on the winding shaft; such that the two second spirals are rolled on the winding shaft in the opposite direction to that of the first spiral, being the first spiral twice as thick as each of the two second spirals.

### BACKGROUND OF THE INVENTION

Different energy absorbing devices are known in the state of the art.

Thus, state of the art is US Patent No. 4791243 "COMPACT DEVICE FOR LONG STROKE ENERGY ABSORPTION", dated 1987, in the name of ANCO ENGINEERS INC., which refers to a compact device for absorbing kinetic energy generated by, for example, broken electric power lines in electric power transmission towers. The device consists of a non-spring helix, or flat or not flat coils that are placed between an electric transmission tower and the conductor insulator. The device deforms by plastically unrolling in response to forces greater than a predetermined force. The device is a single-event device, designed to be replaced after one extraordinary dynamic event. The device can also be used in other structures or machinery requiring compact long-stroke energy absorption. GB2426563 discloses all the features of the preamble of appended claim 1.

### BRIEF DESCRIPTION OF THE INVENTION

This invention belongs to the field of energy absorbing devices that increase the braking power of hanging people or materials attached. The invention is defined in the appended claims.

A similar document to this invention is US Patent US4791243. Such invention is intended to avoid that hanging elements are stopped subsequently to a dynamic event, such as, for example, a fall.

The device has the advantage of a smaller size, being configured as a spring.

On the other hand, its disadvantage is that in order to increase the absorption capacity, the size of the spring must be enlarged too, making it impossible to combine it with a lifeline.

This invention solves prior problems by providing a set of springs, arranged sandwich-like, which springs are connected to each other by a winding shafts, thus allowing the spring run to double, while maintaining the same braking power, or, what is the same, doubling the kinetic energy that the device is capable of absorbing.

In addition, the size of the absorber is reduced, which makes it ideal to be combined with lifelines that have to stay as near as possible to the anchorage point.

In this manner, the total or partial unrolling of the device provides evidence to the fall indicator, that is, that the lifeline has undergone an anomalous effort with respect to its correct use.

Energy absorbing device with fall indicator for lifelines, of the type comprising a winding shaft, a first rolled spiral, which defines two ends, one free first end, which is connected to a cable or a fixed element, and a second end, which is rolled on the winding shaft, characterized by comprising two identical second spirals, arranged parallel to each other and configuring a fork on the sides of the first spiral, said second spirals configure third free ends, arranged in the opposite direction to the free first end, wherein fourth ends of the second spirals are maintained rolled on the winding shaft; such that the two second spirals are rolled on the winding shaft in the opposite direction to that of the first spiral, being the first spiral twice as thick as each of the two second spirals.

### BRIEF DESCRIPTION OF THE DRAWINGS

In order to facilitate the explanation, the present specification is accompanied by three sheets of drawings in which a practical case of embodiment has been represented, which is cited as a non-limiting example of the scope of the present invention:
- Figure 1 is a perspective view of the invention;
- Figure 2 is an exploded view; and
- Figure 3 is a view of the invention having been subjected to effort.

### PRACTICAL EMBODIMENT OF THE PRESENT INVENTION

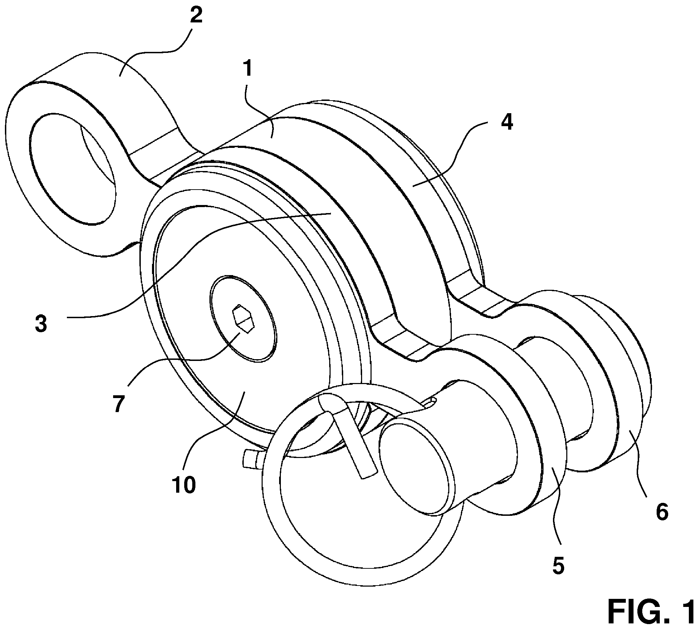

Figure 1 shows a first spiral 1 with one first end 2, second spirals 3, 4 with third ends 5, 6 respectively, a lid 10, and a winding shaft 7.

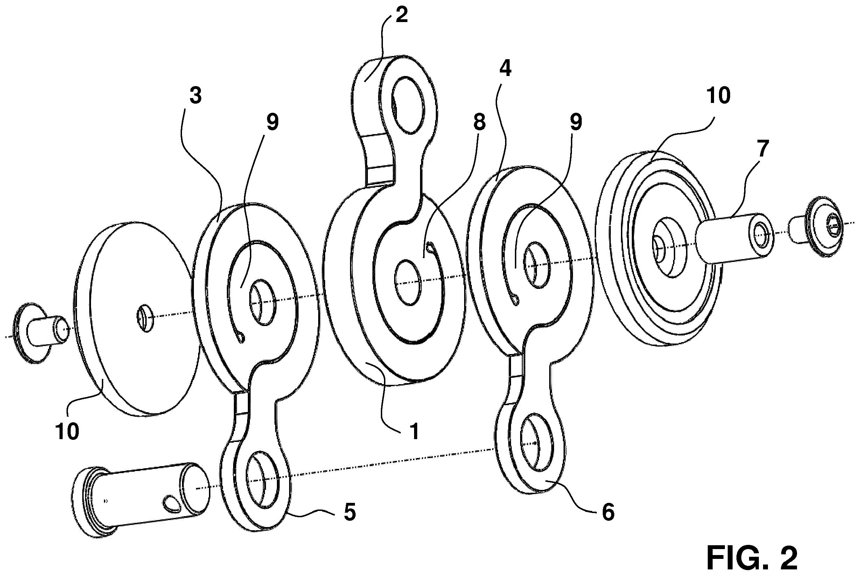

Figure 2 shows first spiral 1 having a first end 2 and a second end 8, second spirals 3, 4 having the third ends 5, 6 and one fourth end 9, lid 10 and winding shaft 7.

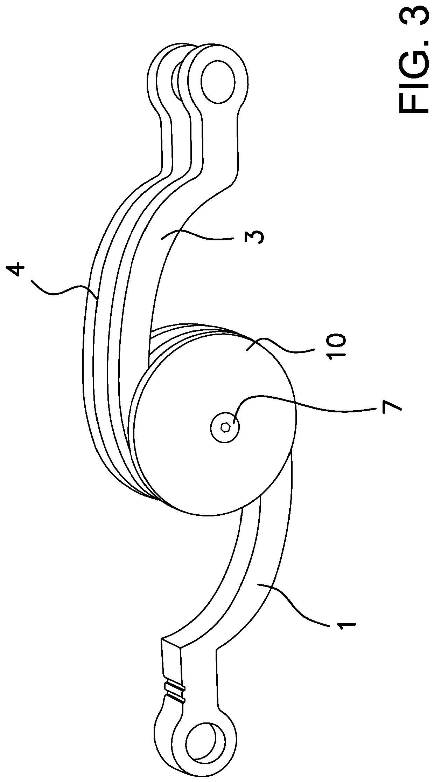

Last, Figure 3 shows spiral 1, second spirals 3, 4, lid 10 and winding shaft 7.

In this way, a practical embodiment would provide the first end 2 affixed to an anchoring device (not shown) and third ends 5, 6 to a lifeline.

The anchoring device is designed to ensure the mechanical strength necessary to withstand the stress produced in an event of a fall, which will be transmitted to the host structure (not shown) of said anchoring device.

If, in an event of an accident, the person tied to the lifeline falls, the person will stay hanging from such lifeline and the third ends 5, 6 will stretch the second spirals 3, 4, by respectively unrolling said spirals 3, 4.

At the same time, since the first end 2 is affixed to an anchoring device, which in turn is affixed to a host structure (for example, a wall), the first spiral 1 will be pushed downwards by the action of the hanging person and of the second spirals in the second end, the second end 8 will rotate, causing the unrolling of the first spiral, and the first spiral will stretch, having the first end 2 affixed to the anchoring device.

Likewise and simultaneously with the first spiral 1 unrolling, the second spirals 3, 4 also unroll, since the fourth ends 9 rotate, and the second spirals 3, 4 stretch out as the hanging person pull them.

The advantage, on the one hand, is that the sandwich-like arrangement allows doubling the kinetic energy that the device is capable of absorbing, thus increasing the safety.

In addition, this allows the natural formation of eyelet-fork connections (a plate with a hole on one side, two separate pierced plates on the other side) that are typical of lifeline terminals, either horizontal or vertical.

In addition, the two second spirals 3, 4 (FIG. 3) are rolled on the winding shaft 7 in an opposite direction to that of first spiral 2, so that when it unrolls in an inverted direction to the direction of the stretching of the first spiral 1, the second spirals 3, 4 also contribute to increasing the absorption capacity of the device.

As regards construction hereof, it is possible to opt to construct spirals 1, 3,4 in one single piece (FIG.2), for example by laser cutting, being already rolled up from the beginning.

Each of the second spirals 3, 4 is half thick as the first spiral 1. This allows greater stability to the whole set, since second spirals 3, 4 being side by side the first spiral 1, unroll simultaneously.

In addition, by both second spirals 3, 4 having an aggregated thickness equal to that of first spiral 1, this allows for the absorber to deform in a constant manner.

This invention describes a new energy absorbing device with fall indicator for lifelines. The examples herein mentioned do not limit the present invention, which may have different applications and/or adaptations, all of which are within the scope of the following claims.

## Claims

1. Energy absorbing device with fall indicator for lifelines, comprising a winding shaft (7), a first rolled spiral (1), which defines one free first end (2) and a second end (8), the free first end (2) is connectable to a cable or a fixed element, and the second end (8) is rolled on the winding shaft (7), the energy absorbing device being **characterised in that** it comprises two identical second spirals (3, 4), arranged parallel to each other and configuring a fork on the sides of the first rolled spiral (1), said second spirals (3, 4) configuring third free ends (5, 6), arranged in the opposite direction to the free first end (2), wherein fourth ends (9) of the second spirals (3, 4) are maintained rolled on the winding shaft (7); such that the two second spirals (3,4) are rolled on the winding shaft (7) in the opposite direction to that of the first spiral (1), the first rolled spiral (1) being twice as thick as each of the two second spirals (3, 4).

2. The device according to Claim 1, wherein the spirals (1), (3), (4) are arranged as one piece.

## Patentansprüche

1. Energieabsorbierende Vorrichtung mit Sturzindikator für Rettungsseile, wobei die Vorrichtung Folgendes aufweist: eine Wickelwelle (7), eine erste eingerollte Spirale (1), die ein freies erstes Ende (2) und ein zweites Ende (8) aufweist, wobei das freie erste Ende (2) mit einem Seil oder einem festen Element verbindbar ist, und das zweite Ende (8) auf der Wickelwelle (7) eingerollt ist, **gekennzeichnet durch** zwei identische zweite Spiralen (3, 4), die parallel zueinander angeordnet sind und eine Gabelung an den Seiten der ersten aufgerollten Spirale (1) bilden, wobei die zweiten Spiralen (3, 4) dritte freie Enden (5, 6) aufweisen, die in der dem freien ersten Ende (2) entgegengesetzten Richtung angeordnet sind, wobei vierte Enden (9) der zweiten Spiralen (3, 4) auf der Wickelwelle (7) eingerollt gehalten sind, derart, dass die beiden zweiten Spiralen (3, 4) auf der Wickelwelle (7) in der der ersten Spirale (1) entgegengesetzten Richtung eingerollt sind, wobei die erste eingerollte Spirale (1) doppelt so dick ist wie jede der beiden zweiten Spiralen (3, 4).

2. Vorrichtung nach Anspruch 1, wobei die Spiralen (1, 3, 4) einstückig ausgebildet sind.

## Revendications

1. Dispositif d'absorption d'énergie avec indicateur de chute pour câbles de sauvetage, comprenant un arbre d'enroulement (7), une première spirale enroulée (1), qui définit une première extrémité libre (2) et une seconde extrémité (8), la première extrémité libre (2) peut être connectée à un câble ou à un élément fixe, et la seconde extrémité (8) est enroulée sur l'arbre d'enroulement (7), le dispositif d'absorption d'énergie étant **caractérisé en ce qu'**il comprend deux secondes spirales identiques (3, 4), disposées parallèlement les unes aux autres et formant une fourche sur les côtés de la première spirale enroulée (1), lesdites secondes spirales (3, 4) formant des troisièmes extrémités libres (5, 6), disposées dans la direction opposée à la première extrémité libre (2), dans lesquelles les quatrièmes extrémités (9) des secondes spirales (3, 4) sont maintenues enroulées sur l'arbre d'enroulement (7) ; de sorte que les deux secondes spirales (3, 4) sont roulées sur l'arbre d'enroulement (7) dans le sens opposé à celui de la première spirale (1), la première spirale enroulée (1) étant deux fois plus épaisse que chacune des deux secondes spirales (3, 4).

2. Le dispositif selon la revendication 1, dans lequel les spirales (1), (3), (4) sont disposées en une seule pièce.
